# EUROPEAN PATENT APPLICATION

(11) **EP 4 851 204 A1**
(43) Date of publication of application: **09.12.2026**
(21) Application number: 25767715.3
(22) Date of filing: 05.03.2025
(51) Int. Cl.: C08F 290/06, B29C 64/124, B29C 64/314, B33Y 70/00

(54) **PHOTOCURABLE COMPOSITION**

(30) Priority: 06.03.2024 JP 2024034239; 04.03.2025 JP 2025033997
(71) Applicant: SUMITOMO RUBBER INDUSTRIES, LTD., Kobe-shi, Hyogo 651-0072 (JP)
(72) Inventor: SETOKAWA, Hiroto, Kobe-shi, Hyogo 651-0072 (JP); KURODA, Kenichi, Kobe-shi, Hyogo 651-0072 (JP); ITO, Naoko, Kobe-shi, Hyogo 651-0072 (JP); FUJIWARA, Takahiro, Kobe-shi, Hyogo 651-0072 (JP)
(74) Representative: Manitz Finsterwald Patent- und Rechtsanwaltspartnerschaft mbB
(86) International application number: PCT/JP2025/007843
(87) International publication number: WO 2025/187720

(57) **Abstract**

[Problem to be solved] An object of the present invention is to provide a photocurable composition providing a shaped product having excellent mechanical properties.

[Solution to solve problem] The photocurable composition according to the present invention contains a urethane (meth)acrylate oligomer and a vinyl monomer, wherein the vinyl monomer includes a first monomer having a glass transition temperature (Tg1) of -100 °C or more and 10 °C or less, and a second monomer having a glass transition temperature (Tg2) of 70 °C or more and 150 °C or less, and the photocurable composition contains inorganic particles having an organic group on the surface in an amount of 15 parts by mass or more and 65 parts by mass or less with respect to 100 parts by mass of a total amount of the urethane (meth)acrylate oligomer and the vinyl monomer.

## Description

### TECHNICAL FIELD

The present invention relates to a photocurable composition, and more suitably relates to a photocurable composition suitable for stereolithography.

### BACKGROUND ART

In recent years, a three-dimensionally laminating and shaping apparatus (so-called 3D printer) for producing a three-dimensional structure by laminating and curing a resin based on design data of the three-dimensional structure has been put into practical use. As the three-dimensional structure produced by the three-dimensionally laminating and shaping apparatus, a three-dimensional structure made of a resin is well known.

For example, Patent literature 1 discloses a rubber composition for three-dimensionally laminating and shaping, wherein the rubber composition comprises a liquid rubber. The rubber composition is suitably used to produce an elastic shaped product by the three-dimensionally laminating and shaping apparatus.

Patent literature 2 discloses a polymer composition for stereolithography comprising a liquid polymer and a monomer, wherein the polymer composition for stereolithography has a viscosity of 3,000 mPa·s or less as measured using an E type viscometer under conditions of a cone plate diameter: 25 mm and a shear rate: 100 s⁻¹ in an environment of a temperature: 25 °C and a relative humidity: 50%.

Patent literature 3 discloses a photocurable composition containing a urethane (meth)acrylate oligomer and a vinyl monomer, wherein the vinyl monomer includes a first monomer having a glass transition temperature (Tg) of -100 °C or more and 20 °C or less, and a second monomer having a glass transition temperature (Tg) of more than 20 °C and 150 °C or less, an amount of the urethane (meth)acrylate oligomer ranges from 20 mass % to 80 mass %, an amount of the first monomer ranges from 15 mass % to 75 mass %, an amount of the second monomer ranges from 5 mass % to 65 mass %, and a total amount of the urethane (meth)acrylate oligomer and the vinyl monomer is 100 mass %.

### Citation List

### Patent Literature

Patent literature 1: WO 2017/154335 A
Patent literature 2: JP 2021-75044 A
Patent literature 3: JP 2023-46297 A

### SUMMARY OF THE INVENION

### Technical Problem

The cured product of the conventional photocurable composition used for stereolithography does not have adequate mechanical properties. The present invention has been achieved in view of the above circumstances, and an object of the present invention is to provide a photocurable composition providing a shaped product having excellent mechanical properties. Another object of the present invention is to provide a photocurable composition providing a shaped product having excellent tear strength while maintaining a viscosity suitable for stereolithography.

### Solution to Problem

The photocurable composition according to the present invention contains a urethane (meth)acrylate oligomer and a vinyl monomer, wherein the vinyl monomer includes a first monomer having a glass transition temperature (Tg1) of -100 °C or more and 10 °C or less, and a second monomer having a glass transition temperature (Tg2) of 70 °C or more and 150 °C or less, and the photocurable composition contains inorganic particles having an organic group on the surface in an amount of 15 parts by mass or more and 65 parts by mass or less with respect to 100 parts by mass of a total amount of the urethane (meth)acrylate oligomer and the vinyl monomer.

According to the present invention, the amount of the inorganic particle can be increased while suppressing the increase in the viscosity of the photocurable composition by using the inorganic particle having the organic group on the surface. As a result, a photocurable composition providing a shaped product having excellent tear strength while maintaining a viscosity suitable for stereolithography is obtained.

### Effect of the Invention

The photocurable composition according to the present invention is suitably used for stereolithography. The photocurable composition according to the present invention maintains a viscosity suitable for stereolithography and provides a shaped product having excellent mechanical properties.

### DESCRIPTION OF PREFERRED EMBODIMENTS

### <Photocurable composition>

The photocurable composition according to the present invention contains a urethane (meth)acrylate oligomer and a vinyl monomer, wherein the vinyl monomer includes a first monomer having a glass transition temperature (Tg1) of -100 °C or more and 10 °C or less, and a second monomer having a glass transition temperature (Tg2) of 70 °C or more and 150 °C or less, and the photocurable composition contains inorganic particles having an organic group on the surface in an amount of 15 parts by mass or more and 65 parts by mass or less with respect to 100 parts by mass of a total amount of the urethane (meth)acrylate oligomer and the vinyl monomer.

### 1. Urethane (meth)acrylate oligomer

The urethane (meth)acrylate oligomer is an oligomer having a (meth)acryloyl group and a urethane bond in the molecule. The (meth)acryloyl group means a methacryloyl group and/or an acryloyl group. The oligomer is a molecule of multiple compounds bonded. The oligomer is, for example, preferably a polymer of about 3 to 100 compounds bonded, more preferably a polymer of about 3 to 50 compounds bonded, and even more preferably a polymer of about 3 to 40 compounds bonded.

Examples of the urethane (meth)acrylate oligomer include a product obtained by a reaction between a urethane prepolymer having an isocyanate group and a (meth)acrylate monomer having a hydroxy group; a product obtained by a reaction between a urethane prepolymer having a hydroxy group and a (meth)acrylate monomer having an isocyanate group; and a product obtained by a reaction between a urethane prepolymer having an amino group and a (meth)acrylate monomer having an isocyanate group. In the present invention, the (meth)acrylate means acrylate and/or methacrylate.

The urethane prepolymer is preferably a product formed by a reaction between a polyisocyanate and a polyol. The molecular chain of the urethane prepolymer has a urethane bond formed by the reaction between the polyisocyanate and the polyol. The urethane prepolymer has an isocyanate group or a hydroxy group at the terminal of the molecular chain. In addition, the urethane prepolymer may have an amino group at the terminal of the molecular chain.

The urethane (meth)acrylate oligomer preferably has the polyisocyanate and the polyol deriving from the urethane prepolymer as the constituent component, and may have the polyisocyanate, the polyol and the polyamine deriving from the urethane prepolymer as the constituent component.

Examples of the polyol component constituting the urethane (meth)acrylate oligomer include a low molecular weight polyol having a molecular weight of less than 500, and a high molecular weight polyol having a number average molecular weight of 500 or more.

Examples of the high molecular weight polyol include a polyether polyol, a polyester polyol, a polycaprolactone polyol, a polycarbonate polyol, and an acrylic polyol. Examples of the polyether polyol include polyoxyethylene glycol (PEG), polyoxypropylene glycol (PPG), and polyoxytetramethylene glycol (PTMG). Examples of the polyester polyol include polyethylene adipate (PEA), polybutylene adipate (PBA), and polyhexamethylene adipate (PHMA). Examples of the polycaprolactone polyol include poly-ε-caprolactone (PCL). Examples of the polycarbonate polyol include polyhexamethylenecarbonate. The high molecular weight polyol may be used solely or as a mixture of at least two of them.

The polyol component constituting the urethane (meth)acrylate oligomer preferably includes at least one member selected from the group consisting of the polyether diol, the polyester diol, the polycaprolactone diol, and the polycarbonate diol.

The number average molecular weight of the polyol component constituting the urethane (meth)acrylate oligomer is preferably 300 or more, more preferably 500 or more, and even more preferably 1000 or more, and is preferably 10000 or less, more preferably 8000 or less, and even more preferably 5000 or less. If the number average molecular weight of the polyol component is 300 or more, softness can be imparted to the shaped product obtained by curing the photocurable composition. If the number average molecular weight of the polyol component is 10000 or less, hardness can be imparted to the shaped product obtained by curing the photocurable composition.

The number average molecular weight of the polyol component can be measured, for example, by gel permeation chromatography (GPC), using polystyrene as a standard material, tetrahydrofuran as an eluate, and an organic solvent system GPC column (e.g. "Shodex (registered trademark) KF series" available from Showa Denko K.K.) as a column.

The polyol component may include a low molecular weight polyol having a molecular weight of less than 500. Examples of the low molecular weight polyol include a diol such as ethylene glycol, diethylene glycol, triethylene glycol, 1,3-butanediol, 1,4-butanediol, neopentyl glycol, and 1,6-hexanediol; and a triol such as glycerin, trimethylolpropane, and hexanetriol. The low molecular weight polyol may be used solely or as a mixture of at least two of them.

The polyamine constituting the urethane (meth)acrylate oligomer is not particularly limited, as long as the polyamine has at least two or more amino groups. Examples of the polyamine include an aliphatic polyamine such as ethylene diamine, propylene diamine, butylene diamine, and hexamethylene diamine; an alicyclic polyamine such as isophorone diamine, and piperazine; and an aromatic polyamine.

The aromatic polyamine is not particularly limited, as long as the aromatic polyamine has at least two amino groups directly or indirectly bonding to an aromatic ring. Herein, "indirectly bonding" means the amino group is bonding to the aromatic ring, for example, via a lower alkylene group. The aromatic polyamine may be a monocyclic aromatic polyamine having one aromatic ring having two or more amino groups bonding thereto, or a polycyclic aromatic polyamine including two or more aminophenyl groups having at least one amino group bonding to one aromatic ring.

Examples of the monocyclic aromatic polyamine include a type having amino groups directly bonding to the aromatic ring, such as phenylene diamine, toluene diamine, diethyltoluene diamine, and dimethylthiotoluene diamine; and a type having amino groups bonding to the aromatic ring via a lower alkylene group, such as xylylene diamine. In addition, the polycyclic aromatic polyamine may be a poly(aminobenzene) having at least two aminophenyl groups directly bonding to each other, or alternatively at least two aminophenyl groups may bond to each other via a lower alkylene group or alkylene oxide group. Among them, a diaminodiphenyl alkane having two aminophenyl groups bonding to each other via a lower alkylene group is preferable, and 4,4'-diaminodiphenyl methane and its derivatives are particularly preferable.

Examples of the polyisocyanate component constituting the urethane (meth)acrylate oligomer include a compound having at least two isocyanate groups. Examples of the polyisocyanate include an aromatic polyisocyanate such as 2,4-tolylene diisocyanate, 2,6-tolylene diisocyanate, a mixture of 2,4-tolylene diisocyanate and 2,6-tolylene diisocyanate (TDI), 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylenediisocyanate (TMXDI), and para-phenylene diisocyanate (PPDI); an alicyclic polyisocyanate or aliphatic polyisocyanate such as 4,4'-dicyclohexylmethane diisocyanate (H₁₂MDI), hydrogenated xylylenediisocyanate (H₆XDI), hexamethylene diisocyanate (HDI), isophorone diisocyanate (IPDI), and norbornene diisocyanate (NBDI); and derivatives of these polyisocyanates. In the present invention, two or more polyisocyanates may be used as the polyisocyanate component.

Examples of the polyisocyanate derivative include an adduct modified product obtained by a reaction between a diisocyanate and a polyhydric alcohol; an isocyanurate modified product of a diisocyanate; a biuret modified product; and an allophanate modified product, and the polyisocyanate derivative from which free diisocyanate has been removed is more preferable.

The adduct modified product is a polyisocyanate obtained by a reaction between a diisocyanate and a polyhydric alcohol. The polyhydric alcohol is preferably a low molecular weight triol such as trimethylolpropane and glycerin. The adduct modified product is preferably a triisocyanate obtained by a reaction between a diisocyanate and trimethylolpropane, or a triisocyanate obtained by a reaction between a diisocyanate and glycerin.

The allophanate modified product is, for example, a triisocyanate obtained by further reacting a diisocyanate with a urethane bond formed by a reaction between a diisocyanate and a low molecular weight diol.

A urethane(meth)acrylic oligomer having a (meth)acryloyl group is obtained, for example, by a reaction between the urethane prepolymer having the isocyanate group at the terminal of the molecular chain and the (meth)acrylate having the hydroxy group. Examples of the (meth)acrylate having the hydroxy group include a hydroxyalkyl (meth)acrylate such as 2-hydroxyethyl (meth)acrylate, 3-hydroxypropyl (meth)acrylate, 2-hydroxypropyl (meth)acrylate, and 4-hydroxybutyl (meth)acrylate.

A urethane(meth)acrylic oligomer having a (meth)acryloyl group is obtained, for example, by a reaction between the urethane prepolymer having the hydroxy group or amino group at the terminal of the molecular chain and the (meth)acrylate having the isocyanate group. Examples of the (meth)acrylate having the isocyanate group include 2-methacryloyloxyethyl isocyanate (trade name "KarenzMOI" available from Showa Denko k.k.), 2-acryloyloxyethyl isocyanate (trade name "KarenzAOI" available from Showa Denko k.k.), and methacryloyloxyethyl isocyanate ethylether (trade name "KarenzMOIEG" available from Showa Denko k.k.).

Examples of the urethane (meth)acrylate oligomer include an aliphatic urethane (meth)acrylate oligomer, and an aromatic urethane (meth)acrylate oligomer. The aliphatic urethane (meth)acrylate oligomer includes an aliphatic compound as the component constituting the urethane (meth)acrylate oligomer, for example, an aliphatic polyisocyanate is used as the constituent component. The aromatic urethane (meth)acrylate oligomer includes an aromatic compound as the component constituting the urethane (meth)acrylate oligomer, for example, an aromatic polyisocyanate is used as the constituent component. These urethane (meth)acrylate oligomers may be used solely, or at least two of them may be used in combination. The urethane (meth)acrylate oligomer preferably includes the aliphatic urethane (meth)acrylate oligomer from the viewpoint of achieving the better effect of the present invention.

The glass transition temperature (Tg) of the urethane (meth)acrylate oligomer is not particularly limited, and is preferably -100 °C or more, more preferably -90 °C or more, and even more preferably -85 °C or more, and is preferably 50 °C or less, more preferably 10 °C or less, even more preferably -20 °C or less, and most preferably -50 °C or less. If the glass transition temperature of the urethane (meth)acrylate oligomer falls within the above range, a mechanical strength can be imparted to the shaped product obtained by curing the photocurable composition while suppressing increase in the glass transition temperature (Tg) of the shaped product.

The urethane (meth)acrylate oligomer preferably has 2 or more (meth)acryloyl groups in the molecule. The number of (meth)acryloyl group in one molecule is not particularly limited, and is preferably 2 or more, and is preferably 10 or less, more preferably 4 or less.

The number average molecular weight of the urethane (meth)acrylate oligomer is preferably 300 or more, more preferably 1000 or more, and even more preferably 3000 or more, and is preferably 30000 or less, more preferably 20000 or less, and even more preferably 15000 or less. If the number average molecular weight of the urethane (meth)acrylate oligomer falls within the above range, the processability in the stereolithography is better, and the shaped product obtained by curing the photocurable composition is more excellent in curing shrinkage rate or mechanical strength.

### 2. Vinyl monomer

The photocurable composition according to the present invention contains a first monomer having a glass transition temperature (Tg1) of -100 °C or more and 10 °C or less, and a second monomer having a glass transition temperature (Tg2) of 70 °C or more and 150 °C or less as a vinyl monomer.

If the first monomer having the glass transition temperature (Tg1) of -100 °C or more and 10 °C or less, and the second monomer having the glass transition temperature (Tg2) of 70 °C or more and 150 °C or less are contained as the vinyl monomer, the shaped product obtained by curing the photocurable composition has excellent mechanical strength.

In the present invention, the "vinyl monomer" is a monomer having a radically polymerizable carbon-carbon double bond in the molecule.

Specific examples of the vinyl monomer include an aromatic vinyl monomer, a vinyl monomer having a hydroxy group, a vinyl monomer having a carboxyl group, a vinyl monomer having a sulfonic acid group, a vinyl monomer having a phosphate group, a vinyl monomer having a tertiary amine, a vinyl monomer having a quaternary ammonium salt group, a vinyl monomer having a heterocycle, a vinyl amide, a vinyl monomer having an epoxy group, a vinyl carboxylate, an α-olefin, a diene, and a (meth)acrylic monomer. These vinyl monomers may be used solely, or at least two of them may be used in combination.

Examples of the vinyl monomer include a monofunctional monomer, and a multi-functional monomer (e.g. a difunctional monomer, a trifunctional monomer, a tetrafunctional monomer, etc.). Preferable examples of the vinyl monomer include the monofunctional monomer, the difunctional monomer, the trifunctional monomer and the tetrafunctional monomer, from the viewpoint of imparting excellent properties to the elastic shaped product obtained by curing the photocurable composition while having an appropriate viscosity for stereolithography. The monofunctional monomer is preferably used from the viewpoint of lowering the viscosity of the photocurable composition in the environment of room temperature. In addition, the multi-functional monomer is preferably used from the viewpoint of imparting excellent properties to the molded product.

The vinyl monomer preferably includes the (meth)acrylate from the viewpoint of having excellent photocuring reactivity while having an appropriate viscosity for stereolithography.

Preferable examples of the monofunctional monomer include a monofunctional (meth)acrylate. Specific examples of the monofunctional (meth)acrylate include ethoxylated nonylphenol acrylate, methyl-2-allyloxymethyl acrylate, m-phenoxybenzyl acrylate, phenoxyethyl (meth)acrylate, phenoxy-2-methylethyl (meth)acrylate, phenoxyethoxyethyl (meth)acrylate, 3-phenoxy-2-hydroxypropyl (meth)acrylate, 2-phenylphenoxyethyl (meth)acrylate, 4-phenylphenoxyethyl (meth)acrylate, 3-(2-phenylphenyl)-2-hydroxypropyl (meth)acrylate, ethylene oxide reacted p-cumylphenol (meth)acrylate, 2-bromophenoxyethyl (meth)acrylate, 2,4-dibromophenoxyethyl (meth)acrylate, 2,4,6-tribromophenoxyethyl (meth)acrylate, several moles of ethylene oxide or propylene oxide modified phenoxy (meth)acrylate, isobornyl (meth)acrylate, bornyl (meth)acrylate, tricyclodecanyl (meth)acrylate, dicyclopentanyl (meth)acrylate, dicyclopentenyl (meth)acrylate, cyclohexyl (meth)acrylate, 4-butylcyclohexyl (meth)acrylate, acryloyl morpholine, 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, amyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxydiethylene glycol (meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, methoxypolypropylene glycol (meth)acrylate, diacetone (meth)acrylamide, isobutoxymethyl (meth)acrylamide, N,N-dimethyl (meth)acrylamide, t-octyl (meth)acrylamide, dimethylaminoethyl (meth)acrylate, diethylaminoethyl (meth)acrylate, 7-amino-3,7-dimethyloctyl (meth)acrylate, N,N-diethyl (meth)acrylamide, N,N-dimethylaminopropyl (meth)acrylamide, hydroxybutylvinyl ether, laurylvinyl ether, cetylvinyl ether, 2-ethylhexylvinyl ether, polyoxyethylene nonylphenyl ether (meth)acrylate, and vinyl monomer (e.g. N-vinylpyrrolidone, N-vinylcaprolactam, vinylimidazole, and vinylpyridine).

In addition, specific examples of the multi-functional (meth)acrylate include polyethylene glycol di(meth)acrylate, dipropylene glycol diacrylate, propoxylated pentyl glycol diacrylate, propoxylated glyceryl triacrylate, trimethylolpropane tri(meth)acrylate, pentaerythritol tri(meth)acrylate, pentaerythritol tetra(meth)acrylate, ethylene glycol di(meth)acrylate, tetraethylene glycol di(meth)acrylate, polypropylene glycol di(meth)acrylate, 1,4-butanediol di(meth)acrylate, 1,6-hexanediol di(meth)acrylate, neopentyl glycol di(meth)acrylate, trimethylolpropanetrioxyethyl (meth)acrylate, tris(2-hydroxyethyl) isocyanurate tri(meth)acrylate, tris(acryloyloxy) isocyanurate, bis(hydroxymethyl)tricyclodecane di(meth)acrylate, dipentaerythritol hexa(meth)acrylate, di(meth)acrylate of a diol which is an addition product of bisphenol A with polyethylene oxide or propylene oxide, di(meth)acrylate of a diol which is an addition product of hydrogenated bisphenol A with polyethylene oxide or propylene oxide, epoxy (meth)acrylate obtained by an addition reaction between diglycidyl ether of bisphenol A and (meth)acrylate, and triethylene glycol divinyl ether.

The glass transition temperature (Tg1) of the first monomer is preferably - 100 °C or more, more preferably -70 °C or more, even more preferably -50 °C or more, and most preferably -20 °C or more, and is preferably 10 °C or less, more preferably 5 °C or less, even more preferably 0 °C or less, and most preferably -5 °C or less. The glass transition temperature (Tg1) of the first monomer is the glass transition temperature of the homopolymer of the first monomer.

Examples of the first monomer having the glass transition temperature (Tg1) of -100 °C or more and 10 °C or less include methyl acrylate (8 °C), ethyl acrylate (-24 °C), 2-ethylhexyl acrylate (-70 °C), 2-ethylhexyl methacrylate (-10 °C), isodecyl methacrylate (-41 °C), n-lauryl methacrylate (-65 °C), 2-hydroxyethyl acrylate (-15 °C), 2-hydroxypropyl acrylate (-7 °C), phenoxyethyl acrylate (-22 °C), lauryl acrylate (-3 °C), isoamyl acrylate (-45°C), butyl acrylate (-55 °C), ethyl acrylate (-24 °C), ethoxydiethylene glycol acrylate (-70 °C), methoxy-triethylene glycol acrylate (-50 °C), and (2-methyl-2-ethyl-1,3-dioxolane-4-yl) methyl acrylate (-7 °C).

The glass transition temperature (Tg2) of the second monomer is preferably 70 °C or more, more preferably 75 °C or more, even more preferably 80 °C or more, and most preferably 90 °C or more, and is preferably 150 °C or less, more preferably 130 °C or less, even more preferably 110 °C or less, and most preferably 100 °C or less. The glass transition temperature (Tg2) of the second monomer is the glass transition temperature of the homopolymer of the second monomer.

The difference (Tg2-Tg1) between the glass transition temperature (Tg2) of the second monomer and the glass transition temperature (Tg1) of the first monomer is preferably 60 °C or more, more preferably 80 °C or more, even more preferably 90 °C or more, and most preferably 100 °C or more, and is preferably 250 °C or less, more preferably 200 °C or less, even more preferably 150 °C or less, and most preferably 120 °C or less.

Examples of the second monomer having the glass transition temperature (Tg2) of 70 °C or more and 150 °C or less include isobornyl acrylate (97 °C), t-butyl methacrylate (107 °C), methyl methacrylate (105 °C), styrene (100 °C), acrylic acid (106 °C), and acrylonitrile (97 °C).

For the glass transition temperature (Tg) of the vinyl monomer, for example, the glass transition temperature disclosed at the following websites can be referred to.
https://www.saiden-chem.co.jp/t_sekkei_ema.html
https://www.kyoeisha.co.jp/product/kinou/lightester.php
https://www.kyoeisha.co.jp/product/kinou/lightacrylate.php
https://www.nitto.com/jp/ja/rd/base/adhesive/specificat/

When the total amount of the urethane (meth)acrylate oligomer and the vinyl monomer is 100 mass %, the amount of the urethane (meth)acrylate oligomer is preferably 20 mass % or more, more preferably 30 mass % or more, and even more preferably 35 mass % or more, and is preferably 80 mass % or less, more preferably 60 mass % or less, and even more preferably 45 mass % or less.

If the amount of the urethane (meth)acrylate oligomer is 80 mass % or less, the viscosity of the photocurable composition is not excessively high such that the shaping by stereolithography becomes easier. In addition, if the amount of the urethane (meth)acrylate oligomer is 20 mass % or more, the mechanical strength of the shaped product obtained by curing the photocurable composition is not lowered.

When the total amount of the urethane (meth)acrylate oligomer and the vinyl monomer is 100 mass %, the amount of the vinyl monomer is preferably 20 mass % or more, more preferably 40 mass % or more, and even more preferably 55 mass % or more, and is preferably 80 mass % or less, more preferably 70 mass % or less, and even more preferably 65 mass % or less. If the amount of the vinyl monomer falls within the above range, the better effect of the present invention can be achieved.

When the total amount of the urethane (meth)acrylate oligomer and the vinyl monomer is 100 mass %, the amount of the first monomer is preferably 15 mass % or more, more preferably 30 mass % or more, and even more preferably 40 mass % or more, and is preferably 75 mass % or less, more preferably 60 mass % or less, and even more preferably 50 mass % or less. If the amount of the first monomer falls within the above range, a mechanical strength can be imparted to the shaped product obtained by curing the photocurable composition while suppressing increase in the glass transition temperature (Tg) of the shaped product.

When the total amount of the urethane (meth)acrylate oligomer and the vinyl monomer is 100 mass %, the amount of the second monomer is preferably 5 mass % or more, more preferably 10 mass % or more, and even more preferably 15 mass % or more, and is preferably 65 mass % or less, more preferably 50 mass % or less, and even more preferably 30 mass % or less. If the amount of the second monomer falls within the above range, a mechanical strength can be imparted to the shaped product obtained by curing the photocurable composition while suppressing increase in the glass transition temperature (Tg) of the shaped product.

It is preferable that the amount of the first monomer and the amount of the second monomer are suitably chosen from the above range, respectively, so that the total amount of the urethane (meth)acrylate oligomer and the vinyl monomer becomes 100 mass %.

### 3. Inorganic particle having an organic group on the surface

The photocurable composition according to the present invention contains inorganic particles having an organic group on the surface. Examples of the inorganic particles include an oxide such as silica, alumina, magnesium oxide, titanium oxide, zinc oxide and ferrite; calcium carbonate; a silicate such as talc, mica, clay and xonotlite; a hydroxide such as aluminum hydroxide and magnesium hydroxide; and a metal particle such as aluminum powder and tungsten powder.

The organic group on the surface of the inorganic particles is preferably a monovalent functional group that comprises a carbon atom and has a polymerizable carbon-carbon double bond reacting with the urethane (meth)acrylate oligomer or the vinyl monomer. This is because if the organic group has the polymerizable carbon-carbon double bond, a functional group with high polymerizability is provided. Furthermore, the double bond has high reactivity and thus enables the polymer formation or functional diversity.

The organic group is a group that partially comprises the polymerizable carbon-carbon double bond, and examples thereof include an alkenyl group, an alkanoyl group, and a group having one part of the hydrogen atoms in these organic groups being substituted. The carbon number of the organic group is 2 or more, preferably 18 or less, more preferably 10 or less, and even more preferably 5 or less.

The inorganic particles used in the present invention preferably have an organic group having the polymerizable carbon-carbon double bond and having 2 to 18 carbon atoms, more preferably have a vinyl group, an isopropenyl group, a 1-propenyl group, a 2-propenyl group or a (meth)acryloyl group, as the organic group. The (meth)acryloyl group means the methacryloyl group and/or the acryloyl group.

A desired organic group can be introduced to the surface of the inorganic particles by a reaction between a hydroxy group present on the surface of the inorganic particle and a silane coupling agent having the organic group. Examples of the inorganic particles having the hydroxy group on the surface include an oxide such as silica, alumina, magnesium oxide, zinc oxide and ferrite; a glass bead; a silicate such as talc, mica, clay and xonotlite; and a hydroxide such as aluminum hydroxide and magnesium hydroxide.

The organic group on the surface of the inorganic particles is preferably an organic group that is introduced on the surface of silica by a reaction between a silanol group present on the surface of silica and the silane coupling agent having the organic group, and preferably a (meth)acryloxy group or vinyl group that is introduced on the surface of silica by a reaction between the silanol group present on the surface of silica and (meth)acryloxy silane or vinyl silane.

The silane coupling agent is not particularly limited, and examples thereof include an alkylalkoxy silane such as methyltrimethoxy silane, dimethyldimethoxy silane, dimethyldiethoxy silane, and triethoxy-n-octyl silane; a vinyl silane such as vinyltrimethoxy silane, and vinyltriethoxy silane; an amino silane such as γ-aminopropyltriethoxy silane, N-(β-aminoethyl)-γ-aminopropyltrimethoxy silane, and N-(β-aminoethyl)-γ-aminopropylmethyldimethoxy silane; an epoxy silane such as γ-glycidoxypropyltrimethoxy silane, and β-glycidoxypropylmethyldimethoxy silane; a methacryloxy silane such as 3-methacryloxypropylmethyldimethoxy silane, 3-methacryloxypropyltrimethoxy silane, 3-methacryloxypropylmethyldiethoxy silane, and 3-methacryloxypropyltriethoxy silane; an acryloxy silane such as 3-acryloxypropyltrimethoxy silane; and a mercapto silane such as γ-mercaptopropyltrimethoxy silane (3-mercaptopropyltrimethoxy silane).

The photocurable composition according to the present invention preferably contains first inorganic particles having a median diameter (50% diameter in the volume cumulative distribution) of 0.2 µm or more and 5.0 µm or less as the inorganic particles having the organic group.

The median diameter (50% diameter in the volume cumulative distribution) of the first inorganic particles is preferably 0.2 µm or more, more preferably 0.5 µm or more, and even more preferably 1.0 µm or more, and is preferably 5.0 µm or less, more preferably 3.0 µm or less, and even more preferably 2.0 µm or less. **If** the median diameter of the first inorganic particles falls within the above range, the increase in the viscosity of the photocurable composition is suppressed, and the mechanical strength of the shaped product can be enhanced.

The photocurable composition according to the present invention also preferably contains second inorganic particles having a median diameter (50% diameter in the volume cumulative distribution) ranging from 0.005 µm to 0.15 µm as the inorganic particles having the organic group on the surface, in addition to the first inorganic particles. If the inorganic particles with the different particle sizes are used, the amount of the inorganic particle can be increased while the increase in the viscosity of the photocurable composition is suppressed. As a result, the filling ratio of the inorganic particle in the shaped product can be increased, and the mechanical strength of the shaped product can be enhanced.

The median diameter (50% diameter in the volume cumulative distribution) of the second inorganic particles is preferably 0.005 µm or more, more preferably 0.01 µm or more, and even more preferably 0.02 µm or more, and is preferably 0.15 µm or less, more preferably 0.1 µm or less, and even more preferably 0.08 µm or less. If the median diameter of the second inorganic particles falls within the above range, the amount of the inorganic particle can be increased while the increase in the viscosity of the photocurable composition is suppressed. As a result, the filling ratio of the inorganic particle in the shaped product can be increased, and the mechanical strength of the shaped product can be enhanced.

The ratio (MD2/MD1) of the median diameter (MD2) of the second inorganic particles to the median diameter (MD1) of the first inorganic particles is preferably 1/50 or more, more preferably 1/30 or more, and even more preferably 1/15 or more, and is preferably 1/5 or less, more preferably 1/6 or less, and even more preferably 1/7 or less. If the ratio (MD2/MD1) of the median diameter (MD2) of the second inorganic particles to the median diameter (MD1) of the first inorganic particles falls within the above range, the amount of the inorganic particle can be increased while the increase in the viscosity of the photocurable composition is suppressed. As a result, the filling ratio of the inorganic particle in the shaped product can be increased, and the mechanical strength of the shaped product can be enhanced.

The median diameter is measured by a dynamic light scattering method (DLS). It is noted that when the inorganic particles aggregate, the median diameter is a median diameter measured when the aggregated particles are dispersed into their primary particle state.

The BET specific surface area of the first inorganic particles is preferably 1 m²/g or more, more preferably 2 m²/g or more, and even more preferably 3 m²/g or more, and is preferably 20 m²/g or less, more preferably 15 m²/g or less, and even more preferably 10 m²/g or less.

The BET specific surface area of the second inorganic particles is preferably 25 m²/g or more, more preferably 30 m²/g or more, and even more preferably 50 m²/g or more, and is preferably 300 m²/g or less, more preferably 200 m²/g or less, and even more preferably 100 m²/g or less.

The mass ratio (second inorganic particle/first inorganic particle) of the second inorganic particles to the first inorganic particles is preferably 1/200 or more, more preferably 1/150 or more, and even more preferably 1/120 or more, and is preferably 1/8 or less, more preferably 1/15 or less, and even more preferably 1/50 or less. If the mass ratio (second inorganic particle/first inorganic particle) of the second inorganic particles to the first inorganic particles falls within the above range, the amount of the inorganic particle can be increased while the increase in the viscosity of the photocurable composition is suppressed. As a result, the filling ratio of the inorganic particle in the shaped product can be increased, and the mechanical strength of the shaped product can be enhanced.

The photocurable composition according to the present invention preferably contains the inorganic particles having the organic group on the surface in an amount of 15 parts by mass or more, more preferably contains the inorganic particles having the organic group on the surface in an amount of 20 parts by mass or more, and even more preferably contains the inorganic particles having the organic group on the surface in an amount of 25 parts by mass or more, and preferably contains the inorganic particles having the organic group on the surface in an amount of 65 parts by mass or less, more preferably contains the inorganic particles having the organic group on the surface in an amount of 60 parts by mass or less, and even more preferably contains the inorganic particles having the organic group on the surface in an amount of 55 parts by mass or less, with respect to 100 parts by mass of the total amount of the urethane (meth)acrylate oligomer and the vinyl monomer. This is because if the amount of the inorganic particles having the organic group on the surface in the photocurable composition falls within the above range, the shaped product has enhanced mechanical strength.

### 4. Other component

The photocurable composition according to the present invention preferably contains a photopolymerization initiator. If the photopolymerization initiator is contained, curing of the above described photocurable composition is accelerated. The photopolymerization initiator is not particularly limited, and a conventional photopolymerization initiator that generates radical by light irradiation is used.

Examples of the photopolymerization initiator include an alkylphenone-based photopolymerization initiator such as 2-hydroxy-2-methylpropiophenone, 2,2-dimethoxy-2-phenylacetophenone, 1-hydroxycyclohexylphenyl ketone, 2-hydroxy-4'-(2-hydroxyethoxy)-2-methylpropiophenone, 2-(4-(methylthio)benzoyl)-2-(4-morpholinyl)propane, 2-(dimethylamino)-1-(4-morpholinophenyl)-2-benzyl-1-butanone, and 2-(dimethylamino)-2-(4-methylbenzyl)-1-(4-morpholinophenyl)butane-1-one; an acylphosphine oxide-based photopolymerization initiator such as phenyl bis(2,4,6-trimethylbenzoyl)phosphine oxide, and 2,4,6-trimethylbenzoyl diphenylphosphine oxide; and an oxime ester-based photopolymerization initiator such as 1,2-octanedione, 1-(4-(phenylthio)-, 2-(O-benzoyloxime)), ethanone, 1-(9-ethyl-6-(2-methylbenzoyl)-9H-carbazol-3-yl)-, and 1-(O-acetyloxime).

In the stereolithography, a light source having a peak of light intensity in a wavelength range of 390 nm to 410 nm, in particular, a light source having a peak of light intensity at a wavelength of 405 nm, is mainly used. The radical polymerization of the photocurable composition is preferably initiated by irradiating the light from such light source. The photopolymerization initiator may be used solely, or at least two of them may be used in combination.

In the stereolithography using the above described light source, the photocurable composition according to the present invention preferably contains at least two photopolymerization initiators having different absorption bands, from the viewpoint of suitably curing the photocurable composition. For example, a photopolymerization initiator having an absorption band at the wavelength region of 405 nm, and a photopolymerization initiator having an absorption band in the wavelength region of 300 nm to 380 nm are preferably used in combination. In the present invention, the alkylphenone-based photopolymerization initiator and the acylphosphine oxide-based photopolymerization initiator are preferably used in combination as the photopolymerization initiator.

The amount of the photopolymerization initiator is preferably 1 part by mass or more, more preferably 1.5 parts by mass or more, and even more preferably 2 parts by mass or more, and is preferably 30 parts by mass or less, more preferably 20 parts by mass or less, even more preferably 10 parts by mass or less, and most preferably 5 parts by mass or less, with respect to 100 parts by mass of the total amount of the urethane (meth)acrylate oligomer and the vinyl monomer.

In case of using the alkylphenone-based photopolymerization initiator and the acylphosphine oxide-based photopolymerization initiator in combination, their mass ratio (alkylphenone-based photopolymerization initiator/acylphosphine oxide-based photopolymerization initiator) is preferably 0.2 or more, more preferably 0.5 or more, and even more preferably 0.8 or more, and is preferably 5 or less, more preferably 3 or less, and even more preferably 2 or less.

The photocurable composition according to the present invention may further contain various additives, as long as these additives do not impair the effect of the present invention. Examples of the additive include a silane coupling agent, dilution polymer, photosensitizer, filler, UV screening agent, dye, pigment, leveling agent, fluidity modifier, antifoaming agent, plasticizer, polymerization inhibitor, flame retardant, dispersion stabilizer, storage stabilizer, antioxidant, metal, metal oxide, metal salt, and ceramic. One kind of or at least two kinds of the additives may be contained in the photocurable composition.

The viscosity of the photocurable composition according to the present invention, as measured using an E type viscometer under conditions of a cone plate diameter: 25 mm and a shear rate: 100 s⁻¹ in an environment of a temperature: 25 °C and a relative humidity: 50%, is preferably 0.1 Pa·s or more, more preferably 0.5 Pa·s or more, and even more preferably 1 Pa·s or more, and is preferably 6.0 Pa·s or less, more preferably 3.0 Pa·s or less, and even more preferably 1.5 Pa·s or less. If the viscosity of the photocurable composition falls within the above range, an elasticity can be imparted to the shaped product obtained by curing the photocurable composition while having an appropriate viscosity for the stereolithography in an environment of room temperature. In addition, if the viscosity of the photocurable composition falls within the above range, the processability is better.

The photocurable composition according to the present invention can be easily produced by mixing the urethane (meth)acrylate oligomer, the vinyl monomer, and the photopolymerization initiator or various additives that are contained where necessary.

The photocurable composition according to the present invention is suitably used for stereolithography.

### <Method for producing object in three-dimensional shape by stereolithography>

The present invention provides a method for producing an object in a three-dimensional shape from the photocurable composition according to the present invention by stereolithography. The method according to the present invention for producing the object in the three-dimensional shape by the stereolithography preferably comprises: a step of irradiating the photocurable composition according to the present invention with light to cure the photocurable composition, and a step of forming the cured photocurable composition into a three-dimensional shape. It is noted that the object in the three-dimensional shape produced by the stereolithography is sometimes simply referred to as "the shaped product" in the present invention.

As the production method of the shaped product according to the present invention, for example, the stereolithography in various modes, such as SLA mode (stereolithography laser mode: Stereolithography Apparatus), DLP mode (stereolithography projector (surface exposure) mode: Digital Light Processing), and LCD mode (stereolithography liquid display mode: Liquid Crystal Display), can be adopted.

The method according to the present invention for producing the object in the three-dimensional shape by the stereolithography preferably comprises, for example, the following first step to Nth step based on design data of the three-dimensional shape.

In the first step, the photocurable composition according to the present invention is supplied on a lithography table, and the photocurable composition is irradiated with light to cure the photocurable composition, thereby forming a first layer composed of the cured product. It is noted that the photocurable composition is preferably supplied in layers on the lithography table. The photocurable composition should be applied to the area on the lithography table that corresponds to the final three-dimensional shape, and is not necessarily applied to the entire surface of the lithography table.

In the second step, the photocurable composition is supplied on the cured product of the first layer, and the photocurable composition is irradiated with light to cure the photocurable composition, thereby forming a second layer composed of the cured product. It is noted that the photocurable composition is preferably supplied in layers on the first layer. The photocurable composition should be applied to the area on the first layer that corresponds to the final three-dimensional shape, and is not necessarily applied to the entire surface of the first layer.

It is preferable to repeat the second step up to the Nth step (where N is a natural number of 3 or greater). In the Nth step, the photocurable composition is supplied on the cured product of the (N-1)th layer, and the photocurable composition is irradiate with light to cure the photocurable composition, thereby forming a Nth layer composed of the cured product. It is noted that the photocurable composition is preferably supplied in layers on the (N-1)th layer. The photocurable composition should be applied to the area on the (N-1)th layer that corresponds to the final three-dimensional shape, and is not necessarily applied to the entire surface of the (N-1)th layer.

By conducting the first step to the Nth step, the photocurable composition is shaped into the object in the three-dimensional shape where the cured product of the photocurable composition are laminated.

In the method according to the present invention for producing the object in the three-dimensional shape by the stereolithography, a conventional 3D printer is preferably used. As the 3D printer, a commercially available 3D printer can be used.

In the stereolithography, the thickness of a single layer when curing the photocurable composition is preferably, for example, about 0.01 mm to 0.5 mm. Further, the irradiating light is generally ultraviolet light, and preferably includes a light having a wavelength of 405 nm. In addition, the illuminance intensity of the irradiating light is preferably about 0.1 mW/cm² to 100 mW/cm² at the measuring wavelength region of 405 nm. The light irradiation time when curing a single layer of the photocurable composition varies depending on the mode of the stereolithography, and is suitably adjusted. For example, in the case of DLP mode, the light irradiation time is about 1 second to 60 seconds. The shaped product according to the present invention is preferably produced in an environment of about room temperature (e.g. 20 °C to 30 °C).

In addition, after the above described stereolithography, a conventional secondary treatment, such as high pressure mercury lamp irradiation, metal halide lamp irradiation, UV-LED irradiation, and heating may be further conducted where necessary. These secondary treatments modify the surface, improve the strength, or accelerate the curing after shaping. The secondary treatment may be conducted in combination with the stereolithography, although the secondary treatment is not always necessary depending on the stereolithography conditions.

### (Shaped product and cured product)

The present invention further includes a cured product or shaped product obtained by curing the photocurable composition according to the present invention.

The cured product or shaped product according to the present invention preferably has rubber elasticity as the mechanical property. The cured product or shaped product according to the present invention preferably has, for example, the following mechanical properties.

The hardness of the cured product or shaped product according to the present invention is preferably 20 or more, more preferably 25 or more, and even more preferably 30 or more, and is preferably 100 or less, more preferably 90 or less, and even more preferably 80 or less, in Shore A hardness. This is because if the hardness of the cured product or shaped product according to the present invention falls within the above range, the cured product or shaped product according to the present invention becomes a substitution for a product required to have a rubber elasticity.

The tensile strength at break of the cured product or shaped product according to the present invention is preferably 1.5 MPa or more, more preferably 2.0 MPa or more, and even more preferably 3.0 MPa or more. This is because if the tensile strength at break of the cured product or shaped product according to the present invention falls within the above range, the cured product or shaped product according to the present invention becomes a substitution for a product required to have a rubber elasticity. The upper limit of the tensile strength at break is not particularly limited, but is generally 50.0 MPa.

The tensile elongation at break of the cured product or shaped product according to the present invention is preferably 50% or more, more preferably 80% or more, and even more preferably 100% or more. This is because if the tensile elongation at break of the cured product or shaped product according to the present invention falls within the above range, the cured product or shaped product according to the present invention becomes a substitution for a product required to have a rubber elasticity. The upper limit of the tensile elongation at break is not particularly limited, but is generally 500%.

The tear strength (kN/m) of the cured product or shaped product according to the present invention is preferably 5 or more, more preferably 10 or more, and even more preferably 15 or more, and is preferably 40 or less, more preferably 35 or less, and even more preferably 30 or less. This is because if the tear strength (kN/m) of the cured product or shaped product according to the present invention falls within the above range, a balance between the tear strength and another mechanical strength is better.

It is noted that the above properties are values measured by the methods described later.

### EXAMPLE

Next, the present invention will be described in detail by way of examples. However, the present invention is not limited to the examples described below. Various changes and modifications without departing from the spirit of the present invention are included in the scope of the present invention.

### 1. Evaluation method

### (Measurement of viscosity of photocurable composition)

The viscosity of the non-cured photocurable composition was measured using an E type viscometer available from Anton-Paar Inc. under conditions of a cone plate diameter: 25 mm and a shear rate: 100 s⁻¹ in an environment of a temperature: 25 °C and a relative humidity: 50%.

### (Hardness of cured product (shaped product))

The Shore A hardness of the cured product (shaped product) (compression test sample of φ 29 × 12.5 mm prescribed in JIS K6262: 2013) obtained by curing the photocurable composition was measured based on the method prescribed in JIS K6253-3: 2012.

### (Tensile test of cured product (shaped product))

The tensile strength at break and tensile elongation at break of the cured product (shaped product) (dumbbell-shaped test piece No. 3 prescribed in JIS K6251: 2017) obtained by curing the photocurable composition were measured based on the method prescribed in JIS K6251: 2017. A greater value of the tensile strength at break means the cured product (shaped product) has higher strength, and a greater value of the tensile elongation at break means the cured product (shaped product) elongates more easily and has better mechanical properties.

### (Tear strength test of cured product (shaped product))

The tear strength (kN/m) of the cured product (shaped product) (unnicked angle test piece prescribed in JIS K6251: 2015) obtained by curing the photocurable composition was measured based on the method prescribed in JIS K6251: 2015. A greater value of the tear strength means the cured product (shaped product) has higher strength, and the cured product (shaped product) has better mechanical properties.

### (Printability with 3D printer)

If the shaped product has been successfully shaped with the 3D printer, it is rated as "Yes", and if the shaped product is partially missing or fails to be shaped with the 3D printer, it is rated as "No".

### 2. Production of photocurable composition

According to the formulations (parts by mass) shown in Tables 1 to 4, the following materials were mixed and defoamed with a planetary centrifugal mixer (revolution and rotation type), to prepare the photocurable compositions. All the components were mixed uniformly. In Tables 1 to 4, "-" means that this component is not contained.

The following materials were used as the materials in Tables 1 to 4.
·Urethane (meth)acrylate oligomer: CN8899NS (aliphatic urethane acrylate oligomer, viscosity at 60 °C: 25000 mPa·s to 35000 mPa·s, glass transition temperature: -80 °C) available from Arkema
·First vinyl monomer: MEDOL-10 (2-methyl-2-ethyl-1,3-dioxolane-4-yl)methyl acrylate, molecular weight: 200.2, viscosity at 25 °C: 5.1 mPa·s, glass transition temperature: -7 °C) available from Osaka Organic Chemical Industry Ltd.
·Second vinyl monomer: IBXA (isobornyl acrylate, molecular weight: 208.3, viscosity at 25 °C: 7.7 mPa·s, glass transition temperature: 97 °C) available from Osaka Organic Chemical Industry Ltd.
·Silica 1: SC2500-SMJ (silica having a methacryloyl group, median diameter (primary particle size): 500 nm, BET specific surface area: 5.2 m²/g) available from Admatechs Co., Ltd.
·Silica 2: SC5500-SMJ (silica having a methacryloyl group, median diameter (primary particle size): 1500 nm, BET specific surface area: 3.4 m²/g) available from Admatechs Co., Ltd.
·Silica 3: Nipsil KQ (amorphous silicon dioxide, primary particle size: 13.9 nm, BET specific surface area: 207 m²/g) available from Tosoh Corporation
·Silica 4: Nipsil VN3#100 (amorphous silicon dioxide, primary particle size: 17.1 nm, BET specific surface area: 192 m²/g) available from Tosoh Corporation
·Silica 5: YA050C-SM1 (silica having a methacryloyl group, median diameter (primary particle size): 50 nm, BET specific surface area: 65 m²/g) available from Admatechs Co., Ltd.
·Silane coupling agent: Triethoxy-n-octylsilane (silicon compound alkyl silane, triethoxy-n-octylsilane, molecular weight: 276.5) available from Tokyo Kasei Kogyo Co., Ltd.
·Photopolymerization initiator 1: Omnirad 819 (acylphosphine oxide-based photopolymerization initiator, phenylbis(2,4,6-trimethylbenzoyl)phosphine oxide, molecular weight: 418.5) available from IGM Resins B.V.
·Photopolymerization initiator 2: Omnirad 1173 (alkylphenone-based photopolymerization initiator, 2-hydroxy-2-methyl propiophenone, molecular weight: 164.2, viscosity at 25 °C: 25 mPa·s) available from IGM Resins B.V.

**Table 1**

| Photocurable composition No. | | 1 | 2 | 3 | 4 | 5 | 6 | 7 |
|---|---|---|---|---|---|---|---|---|
| Formulation (parts by mass) | Urethane (meth)acrylate oligomer | 40 | 40 | 40 | 40 | 40 | 40 | 40 |
| | Second vinyl monomer | 15 | 15 | 15 | 15 | 15 | 15 | 15 |
| | First vinyl monomer | 45 | 45 | 45 | 45 | 45 | 45 | 45 |
| | Silica 1 | - | 10 | 30 | 50 | 60 | 70 | 80 |
| | Photopolymerization initiator 1 | 1.1 | 1.1 | 1.1 | 1.1 | 1.1 | 1.1 | 1.1 |
| | Photopolymerization initiator 2 | 1.5 | 1.5 | 1.5 | 1.5 | 1.5 | 1.5 | 1.5 |
| Properties of cured product (shaped product) | Shear viscosity (Pa·s) | 2.9 | 3.3 | 3.9 | 5.1 | 5.8 | 6.5 | 7.4 |
| | Hardness (Shore A) | 34 | 34 | 51 | 64 | 68 | 74 | 78 |
| | Tensile stress (MPa) | 1.6 | 4.5 | 7.2 | 9.7 | 9.6 | 10.1 | 10.3 |
| | Elongation (%) | 274 | 273 | 246 | 222 | 203 | 189 | 172 |
| | Tear strength (kN/m) | 6.2 | 9.0 | 14.4 | 20.0 | 20.7 | 21.8 | 23.1 |
| Printability with 3D printer | | Yes | Yes | Yes | Yes | Yes | No | No |

**Table 2**

| Photocurable composition No. | | 8 | 9 | 10 | 11 | 12 | 13 |
|---|---|---|---|---|---|---|---|
| Formulation (parts by mass) | Urethane (meth)acrylate oligomer | 40 | 40 | 40 | 40 | 40 | 40 |
| | Second vinyl monomer | 15 | 15 | 15 | 15 | 15 | 15 |
| | First vinyl monomer | 45 | 45 | 45 | 45 | 45 | 45 |
| | Silica 2 | 10 | 30 | 50 | 60 | 70 | 80 |
| | Photopolymerization initiator 1 | 1.1 | 1.1 | 1.1 | 1.1 | 1.1 | 1.1 |
| | Photopolymerization initiator 2 | 1.5 | 1.5 | 1.5 | 1.5 | 1.5 | 1.5 |
| Properties of cured product (shaped product) | Shear viscosity (Pa·s) | 3.2 | 3.6 | 4.9 | 5.6 | 6.4 | 7.4 |
| | Hardness (Shore A) | 38 | 44 | 56 | 59 | 64 | 68 |
| | Tensile stress (MPa) | 3.5 | 7.4 | 8.9 | 9.2 | 9.7 | 9.8 |
| | Elongation (%) | 260 | 243 | 230 | 212 | 201 | 187 |
| | Tear strength (kN/m) | 8.9 | 10.9 | 13.3 | 16.5 | 17.2 | 21 |
| Printability with 3D printer | | Yes | Yes | Yes | Yes | No | No |

**Table 3**

| Photocurable composition No. | | 14 | 15 | 16 | 17 | 18 | 19 | 20 |
|---|---|---|---|---|---|---|---|---|
| Formulation (parts by mass) | Urethane (meth)acrylate oligomer | 40 | 40 | 40 | 40 | 40 | 40 | 40 |
| | Second vinyl monomer | 15 | 15 | 15 | 15 | 15 | 15 | 15 |
| | First vinyl monomer | 45 | 45 | 45 | 45 | 45 | 45 | 45 |
| | Silica 3 | 5 | 7.5 | 20 | - | - | - | - |
| | Silica 4 | - | - | - | 5 | 7.5 | 10 | 20 |
| | Silane coupling agent | 0.55 | 0.83 | 2.20 | 0.55 | 0.83 | 1.10 | 2.20 |
| | Photopolymerization initiator 1 | 1.5 | 1.5 | 1.5 | 1.5 | 1.5 | 1.5 | 1.5 |
| Properties of cured product (shaped product) | Shear viscosity (Pa·s) | 5.3 | 6.5 | 12.0 | 3.0 | 3.5 | 4.5 | 7.5 |
| | Hardness (Shore A) | 40 | 40 | 51 | 35 | 35 | 40 | 50 |
| | Tensile stress (MPa) | 2.0 | 4.6 | 12.7 | 2.3 | 3.5 | 6.1 | 11.2 |
| | Elongation (%) | 261 | 328 | 327 | 262 | 297 | 367 | 335 |
| | Tear strength (kN/m) | 7.2 | 8.8 | 11.0 | 7.0 | 7.5 | 9.5 | 12.0 |
| Printability with 3D printer | | Yes | No | No | Yes | Yes | Yes | No |

**Table 4**

| Photocurable composition No. | | 21 | 22 | 23 |
|---|---|---|---|---|
| Formulation (parts by mass) | Urethane (meth)acrylate oligomer | 40 | 40 | 40 |
| | Second vinyl monomer | 15 | 15 | 15 |
| | First vinyl monomer | 45 | 45 | 45 |
| | Silica 1 | 49.5 | 47.5 | 45 |
| | Silica 5 | 0.5 | 2.5 | 5 |
| | Photopolymerization initiator 1 | 1.1 | 1.1 | 1.1 |
| | Photopolymerization initiator 2 | 1.5 | 1.5 | 1.5 |
| Properties of cured product (shaped product) | Shear viscosity (Pa·s) | 4.3 | 4.5 | 5.0 |
| | Hardness (Shore A) | 61 | 59 | 62 |
| | Tensile stress (MPa) | 8.9 | 7.8 | 3.9 |
| | Elongation (%) | 190 | 179 | 116 |
| | Tear strength (kN/m) | 34.0 | 27.0 | 32.0 |
| Printability with 3D printer | | Yes | Yes | Yes |

### 3. Production of shaped product (object in three-dimensional shape)

The photocurable composition was fabricated into the shaped product by stereolithography in a DLP mode. Specifically, the photocurable composition was fabricated into the shaped product using a 3D printer provided with a light source (UV-LED) having a peak wavelength of 405 nm, under conditions of temperature: 23 °C, laminating pitch: 0.1 mm, irradiation time per layer: 20 seconds, and illuminance intensity at the wavelength of 405 nm: 5.0 mW/cm². The shaped products were produced in three shapes, respectively. The first one is the test piece of φ 29 × 12.5 mm prescribed in JIS K6262: 2013, used for the above described hardness measurement. The second one is the dumbbell-shaped test piece No. 3 prescribed in JIS K6251: 2017, used for the above described tensile test. The third one is the unnicked angle test piece prescribed in JIS K6251: 2015, used for the above described tear strength test.

The measured results of hardness, tensile strength at break, tensile elongation at break, and tear strength for the obtained shaped products are shown in Tables 1 to 4.

It is apparent from the results shown in Tables 1 to 3 that the photocurable composition according to the present invention containing a urethane (meth)acrylate oligomer and a vinyl monomer, wherein the vinyl monomer includes a first monomer having a glass transition temperature (Tg1) of -100 °C or more and 10 °C or less, and a second monomer having a glass transition temperature (Tg2) of 70 °C or more and 150 °C or less, and the photocurable composition contains inorganic particles having an organic group on the surface in an amount of 15 parts by mass or more and 65 parts by mass or less with respect to 100 parts by mass of a total amount of the urethane (meth)acrylate oligomer and the vinyl monomer provides a shaped product having excellent mechanical properties, and has a viscosity range suitable for use in stereolithography.

It is apparent from the results shown in Table 4 that compared to the photocurable composition No. 4 having the same silica amount, the photocurable compositions No. 21 to No. 23 containing the first inorganic particles having the median diameter ranging from 0.2 µm to 5.0 µm and the second inorganic particles having the median diameter ranging from 0.005 µm to 0.15 µm as the inorganic particle having the organic group on the surface can provide a shaped product having improved tear strength while suppressing the increase in the viscosity.

### Industrial Applicability

The photocurable composition according to the present invention is suitable for stereolithography.

The preferable embodiment (1) according to the present invention is a photocurable composition containing a urethane (meth)acrylate oligomer and a vinyl monomer, wherein the vinyl monomer includes a first monomer having a glass transition temperature (Tg1) of -100 °C or more and 10 °C or less, and a second monomer having a glass transition temperature (Tg2) of 70 °C or more and 150 °C or less, and the photocurable composition contains inorganic particles having an organic group on the surface in an amount of 15 parts by mass or more and 65 parts by mass or less with respect to 100 parts by mass of a total amount of the urethane (meth)acrylate oligomer and the vinyl monomer.

The preferable embodiment (2) according to the present invention is the photocurable composition according to the embodiment (1), wherein the photocurable composition contains first inorganic particles having a median diameter ranging from 0.2 µm to 5.0 µm as the inorganic particle having the organic group on the surface.

The preferable embodiment (3) according to the present invention is the photocurable composition according to the embodiment (2), wherein the photocurable composition further contains second inorganic particles having a median diameter ranging from 0.005 µm to 0.15 µm as the inorganic particle having the organic group on the surface.

The preferable embodiment (4) according to the present invention is the photocurable composition according to the embodiment (3), wherein a ratio (MD2/MD1) of the median diameter (MD2) of the second inorganic particles to the median diameter (MD1) of the first inorganic particles is 1/50 or more and 1/5 or less.

The preferable embodiment (5) according to the present invention is the photocurable composition according to the embodiment (3) or (4), wherein a mass ratio (second inorganic particles / first inorganic particles) of the second inorganic particles to the first inorganic particles is 1/200 or more and 1/8 or less.

The preferable embodiment (6) according to the present invention is the photocurable composition according to any one of the embodiments (1) to (5), wherein the organic group is an organic group including a polymerizable carbon-carbon double bond and having 2 to 18 carbon atoms.

The preferable embodiment (7) according to the present invention is the photocurable composition according to any one of the embodiments (1) to (6), wherein the organic group is a vinyl group, an isopropenyl group, a 1-propenyl group, a 2-propenyl group, or a (meth)acryloyl group.

The preferable embodiment (8) according to the present invention is the photocurable composition according to any one of the embodiments (1) to (7), wherein the inorganic particles are silica.

The preferable embodiment (9) according to the present invention is the photocurable composition according to any one of the embodiments (1) to (8), wherein the inorganic particles have a BET specific surface area of 10 m²/g or less.

The preferable embodiment (10) according to the present invention is the photocurable composition according to any one of the embodiments (1) to (9), wherein an amount of the urethane (meth)acrylate oligomer ranges from 20 mass % to 80 mass %, an amount of the first monomer ranges from 15 mass % to 75 mass %, an amount of the second monomer ranges from 5 mass % to 65 mass %, and the total amount of the urethane (meth)acrylate oligomer and the vinyl monomer is 100 mass %.

The preferable embodiment (11) according to the present invention is the photocurable composition according to any one of the embodiments (1) to (10), wherein the urethane (meth)acrylate oligomer has a (meth)acryloyl group.

The preferable embodiment (12) according to the present invention is the photocurable composition according to any one of the embodiments (1) to (11), wherein the urethane (meth)acrylate oligomer has a glass transition temperature (Tg) ranging from -100 °C to 50 °C.

The preferable embodiment (13) according to the present invention is the photocurable composition according to any one of the embodiments (1) to (12), wherein the vinyl monomer is at least one member selected from the group consisting of a monofunctional vinyl monomer, a difunctional vinyl monomer, a trifunctional vinyl monomer, and a tetrafunctional vinyl monomer.

The preferable embodiment (14) according to the present invention is the photocurable composition according to any one of the embodiments (1) to (13), wherein the vinyl monomer includes (meth)acrylate.

The preferable embodiment (15) according to the present invention is the photocurable composition according to any one of the embodiments (1) to (14), wherein the photocurable composition has a viscosity of 6.0 Pa·s or less as measured at a temperature of 25 °C and a shear rate of 100 s⁻¹.

The preferable embodiment (16) according to the present invention is the photocurable composition according to any one of the embodiments (1) to (15), wherein the photocurable composition is for stereolithography.

## Claims

1. A photocurable composition containing a urethane (meth)acrylate oligomer and a vinyl monomer, wherein
the vinyl monomer includes a first monomer having a glass transition temperature (Tg1) of -100 °C or more and 10 °C or less, and a second monomer having a glass transition temperature (Tg2) of 70 °C or more and 150 °C or less, and
the photocurable composition contains inorganic particles having an organic group on the surface in an amount of 15 parts by mass or more and 65 parts by mass or less with respect to 100 parts by mass of a total amount of the urethane (meth)acrylate oligomer and the vinyl monomer.

2. The photocurable composition according to claim 1, wherein the photocurable composition contains first inorganic particles having a median diameter ranging from 0.2 µm to 5.0 µm as the inorganic particles having the organic group on the surface.

3. The photocurable composition according to claim 2, wherein the photocurable composition further contains second inorganic particles having a median diameter ranging from 0.005 µm to 0.15 µm as the inorganic particles having the organic group on the surface.

4. The photocurable composition according to claim 3, wherein a ratio (MD2/MD1) of the median diameter (MD2) of the second inorganic particles to the median diameter (MD1) of the first inorganic particles is 1/50 or more and 1/5 or less.

5. The photocurable composition according to claim 3, wherein a mass ratio (second inorganic particles / first inorganic particles) of the second inorganic particles to the first inorganic particles is 1/200 or more and 1/8 or less.

6. The photocurable composition according to claim 1 or 3, wherein the organic group is an organic group including a polymerizable carbon-carbon double bond and having 2 to 18 carbon atoms.

7. The photocurable composition according to claim 1 or 3, wherein the organic group is a vinyl group, an isopropenyl group, a 1-propenyl group, a 2-propenyl group, or a (meth)acryloyl group.

8. The photocurable composition according to claim 1 or 3, wherein the inorganic particles are silica.

9. The photocurable composition according to claim 1, wherein the first inorganic particles have a BET specific surface area of 10 m²/g or less.

10. The photocurable composition according to claim 1 or 3, wherein
an amount of the urethane (meth)acrylate oligomer ranges from 20 mass % to 80 mass %,
an amount of the first monomer ranges from 15 mass % to 75 mass %,
an amount of the second monomer ranges from 5 mass % to 65 mass %, and
the total amount of the urethane (meth)acrylate oligomer and the vinyl monomer is 100 mass %.

11. The photocurable composition according to claim 1 or 3, wherein the urethane (meth)acrylate oligomer has a (meth)acryloyl group.

12. The photocurable composition according to claim 1 or 3, wherein the urethane (meth)acrylate oligomer has a glass transition temperature (Tg) ranging from -100 °C to 50 °C.

13. The photocurable composition according to claim 1 or 3, wherein the vinyl monomer is at least one member selected from the group consisting of a monofunctional vinyl monomer, a difunctional vinyl monomer, a trifunctional vinyl monomer, and a tetrafunctional vinyl monomer.

14. The photocurable composition according to claim 1 or 3, wherein the vinyl monomer includes (meth)acrylate.

15. The photocurable composition according to claim 1 or 3, wherein the photocurable composition has a viscosity of 6.0 Pa·s or less as measured at a temperature of 25 °C and a shear rate of 100 s⁻¹.

16. The photocurable composition according to claim 1 or 3, wherein the photocurable composition is for stereolithography.
